# EUROPEAN PATENT APPLICATION

(11) **EP 1 034 980 A2**
(43) Date of publication of application: **13.09.2000**
(21) Application number: 00301681.3
(22) Date of filing: 01.03.2000
(51) Int. Cl.: B60R 11/04

(54) **Control system for a vehicle situated device**

(30) Priority: 12.03.1999 GB 9905603
(71) Applicant: Talbot, John Storey, Dr., Derwen Fawr, Swansea SA2 8DZ (GB)
(72) Inventor: Talbot, John Storey, Dr., Derwen Fawr, Swansea SA2 8DZ (GB)
(74) Representative: Davies, Gregory Mark

(57) **Abstract**

A control system for a vehicle situated device (1) includes a shut-out arrangement (3) denying access to, or disabling an adjustment feature (5) of the device (1) but permitting the device to operate in a predetermined mode of operation when the vehicle is in a first state of operation. The shut-out means (3) is disabled or overridable when the vehicle is in an alternate state of operation, thereby permitting the respective adjustment feature (5) to be accessed or enabled. The shut-out arrangement (3) is typically operated to deny access to or disable the relevant adjustment feature (5) of the vehicle situated device (1) when the vehicle engine is running and/or when the vehicle is in motion. The arrangement reduces driver distraction and thereby reduces driver error and the risk of accident.

## Description

The present invention relates to a control system for a vehicle situated device.

Vehicle mounted devices such as radio, CD, and audiotape entertainment systems are frequently factory fitted in modern vehicles. Other electrical and electronic apparatus having adjustable controls are becoming in-vehicle or on-vehicle mounted. For example GPS or other navigational data devices are now frequently in-vehicle mounted. Additionally vehicle monitoring devices (such as in vehicle video or audio monitoring devices) are now being proposed to monitor vehicle/driver performance or for continuous or instantaneous monitoring of crashes and other events. Such a system is disclosed in for example US-A-4281354.

In nearly all cases in-vehicle devices have the potential for controls to be adjusted by the driver. It is believed that the potential to adjust controls whilst the vehicle is moving or about to move can cause serious driver distraction and a risk of accident.

An improved control system for vehicle mounted devices has now been devised.

According to a first aspect, there is provided a control system for a vehicle situated device, which control system comprises shut-out means denying access to, or disabling an adjustment feature of the device but permitting the device to operate in a predetermined mode of operation when the vehicle is in a first condition of operation, the shut-out means being disabled or overridable when the vehicle is in an alternate state of operation, thereby permitting the respective adjustment feature to be accessed or enabled.

The shut-out means preferably acts to deny access to or disable the relevant adjustment feature of the vehicle situated device when the vehicle engine is running and/or when the vehicle is in motion. The shut-out means is therefore preferably operatively linked to the vehicle engine ignition system and/or an engine management system of the vehicle and/or vehicle motion sensor means.

The adjustment feature may comprise a control of the device which may be arranged to enable the status or mode of operation of the device to be adjusted or the positional orientation of the device to be varied. For example, where the device is an in-vehicle mounted video camera, the orientation of the camera, the recording status of the camera and other control adjustables comprise respective adjustment features.

The control system is arranged to permit the vehicle situated device to operate in a predetermined mode of operation when the shut-out means is denying access to, or disabling the adjustment feature of the device. For example, where the device is an in-vehicle mounted video camera, the device is preferably operational in video record mode whilst the engine is running and/or the vehicle is in motion, although access to, for example, the play/record controls of the camera is denied (or the relevant controls are disabled) by the shut-out means.

In a first embodiment, the shut-out means may comprise a physical shield or barrier arranged to be configured to deny access to the adjustment feature of the device when the vehicle is in the first condition of operation. The shut out means preferably, in this embodiment, includes locking means to ensure that the shield or barrier is locked in the shut-out position. The control system preferably further includes fail-safe means ensuring that the vehicle engine cannot be started (or the vehicle cannot be moved) until the shield or barrier is in the shut-out position. For example, the locking means may be actuated by the vehicle ignition (including a solenoid actuated locking element, for example), feedback preferably being provided confirming that the shield or barrier is locked in position following operation of the locking means before the ignition sequence of the engine is completed and or the vehicle can be set in motion.

In an alternative embodiment, the adjustment feature of the vehicle situated device operates to provide an operational control signal to control the device and the shut-out means operates to disable or deactivate the control signal when the vehicle is in the first condition of operation. For example, where the device is an in-vehicle mounted video camera, the device is preferably operational in video record mode whilst the engine is running and/or the vehicle is in motion, although the manually accessible controls of the video camera are disabled by the shut-out means. The shut-out means may therefore comprise an electrical by-pass of the relevant adjustment feature, the by-pass being operational when the vehicle is in its first condition of operation (for example when the engine is running or the vehicle is in motion), the by-pass being overridden when the vehicle is in the alternate state (when the engine is not running) permitting manual adjustment of the adjustment feature of the device.

The two embodiments of the control system may be combined such that the system comprises a shut-out in the form of a physical shield or barrier and also a shut-out in the form of an overridable electrical bypass of the relevant adjustment feature.

As mentioned above, the invention is particularly suited for use in monitoring vehicle motion or driver ability (such as with, for example a dash mounted video recording device). The invention ensures that a driver is aware that a monitoring device is present and operational, but reduces driver temptation to manually adjust adjustment features of the device, because this is not permitted by the operation of the shut-out means whilst the vehicle engine is running and/or the vehicle is in motion.

According to a second aspect of the invention, there is provided a vehicle/driver monitoring arrangement comprising:
i) a vehicle situated electrical or electronic monitoring device; and,
ii) a control arrangement for controlling the monitoring device, which control arrangement comprising shut-out means denying access to, or disabling an adjustment feature of the device but permitting operation of the device in a predetermined mode of operation when the vehicle is in a first condition of operation, the shut-out means being disabled or overrideable when the vehicle is in an alternate state of operation, thereby permitting the respective adjustment means to be accessed or enabled.

Preferred features of the invention according to the second aspect of the invention correspond to preferred features described and explained above for the first aspect of the invention.

The invention will now be further described in specific embodiments by way of example only, and with reference to the accompanying drawings, in which:
Figure 1, is a schematic view of a first embodiment of a monitoring and a control system according to the invention; and,
Figure 2, is a schematic diagrammatic representation of an alternative embodiment of a control system according to the invention.

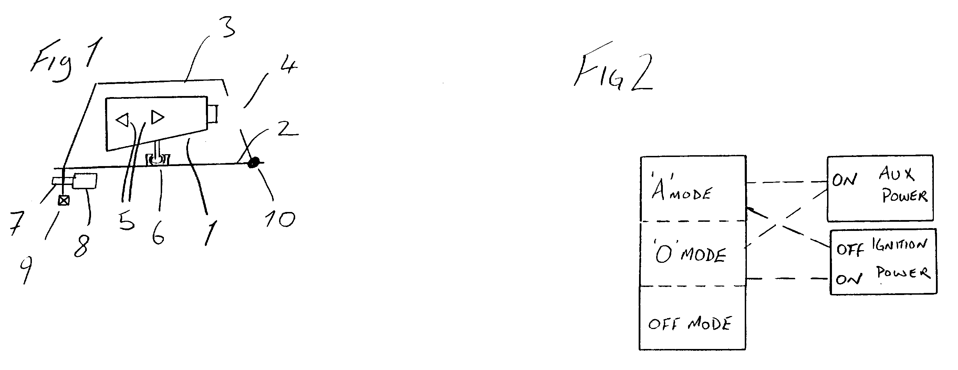

Referring to the drawings, and initially Figure 1, there is shown a video camera 1 mounted in the interior of a vehicle to a vehicle dash sill 2 such that the video camera 1 is able to record through the windscreen of the vehicle in line with the "driver's eye" view. A closure shield 3 is mounted to fully enclose the video camera 1, and provided with a window aperture 4 permitting the video camera to record action externally of the vehicle through the windscreen. (Alternatively, the camera 1 may be orientated to face the driver and record the drivers actions during driving).

In the configuration shown in Figure 1, closure shield 3 denies access to the play/record controls 5 of the camera, and also prevents the camera being reorientated upon its rotational mount 6. A locking element 7 of an electrically operated solenoid 8 passes through an apertured extension of closure 3 (received below the level of the dash sill 2). The apertured extension contacts a limit switch 9 when the shield 3 is in the position shown in Figure 1, providing an electrical output signal enabling the location of closure shield 3 to be confirmed.

Closure shield 3 is pivotable about a hinge 10 to a position in which access to the controls 5 and manipulation of camera 1 about pivot mount 6 is permitted.

In operation, the vehicle ignition is coupled to solenoid 8 and limit switch 9 (optionally via the vehicle engine management system) such that, with the shield 3 in the position shown in figure 1, (in which access to the controls 5 and mount 6 is denied and the limit switch and solenoid arm 7 are engaged), full ignition of the vehicle engine is permitted. If however the relevant inputs/outputs from limit switch 9 and solenoid 8 show that the solenoid locking element 7 is not advanced and/or that the limit switch 9 is not closed, full ignition of the engine is not permitted. In this way, closure shield 3 provides a shut-out denying access to the controls 5 and pivotal mount 6 of the video camera when the vehicle ignition is fully on (i.e. when the engine is running).

The vehicle mounted camera 1 enables video recording of the driver's eye view through the windscreen of the vehicle during driving. The driver, whilst being aware of the fact that the camera is recording, it is not able to operate controls 5 or adjust the orientation of camera 1 about pivot mount 6 whilst the vehicle is moving. The driver can only access controls 5 and pivot mount 6 when the vehicle is stationary and the engine is not running. Turning off the engine causes the locking element 7 to be retracted by solenoid 8, permitting closure 3 to be pivoted to an access position in which the "shut-out" from controls 5 and pivot mount 6 is overcome.

As an alternative to the embodiment shown in Figure 1, the effective "shut-out" can be achieved by means of appropriate circuitry and wiring of the controls 5 of the video camera 1. In this embodiment, the engine ignition circuitry is wired directly (or via the engine management system of the vehicle) to the controls of the video camera to ensure that an effective by-pass of the relevant controls 5 are provided when the vehicle ignition is fully on (i.e. the engine is running) ensuring that the video camera is able to operate in record operational mode ('O'- mode in Figure 2) when the engine is running but the controls 5 do not operate to change the operation status or mode of operation of the camera. When the ignition is switched to the auxiliary power only limit, the by-pass is overridden and the controls 5 may be adjusted manually ('A'- mode in figure 2). When the ignition is in the off position the control system is in off mode.

The invention has been described primarily in respect of operating a video camera system, but can be equally applied to other vehicle situated electrical/electronic apparatus such as for example entertainment CD, tape or radio systems, vehicle situated telecommunications apparatus (such as mobile phones, hands free phone sets navigational displays television apparatus etc). The principle operation is the same in that the control system operates to permit operation of the relevant electrical/electronic device in a predetermined mode when the vehicle engine is running, whilst disabling operation of one or more manual adjustment/control features of the device via an adjustment feature shut-out. The feature shut-out is overriden when the status of operation of the vehicle changes (for example when the engine is not running). Furthermore, it is not essential that the "0"/"A" mode operation is determined by vehicle ignition status (or whether the engine is running). It is possible, for example, to control the status switch by means of monitoring other parameters of the vehicle such as for example whether the vehicle is in motion (by for example using a motion sensor/accelerometer or the like).

## Claims

1. A control system for a vehicle situated device, which control system comprises shut-out means denying access to, or disabling an adjustment feature of the device but permitting the device to operate in a predetermined mode of operation when the vehicle is in a first state of operation, the shut-out means being disabled or overridable when the vehicle is in an alternate state of operation, thereby permitting the respective adjustment feature to be accessed or enabled.

2. A system according to claim 1, wherein the shut-out means acts to deny access to or disable the relevant adjustment feature of the vehicle situated device when the vehicle engine is running and/or when the vehicle is in motion.

3. A system according to claim 1 or claim 2, wherein the shut-out means is operatively linked to the vehicle engine ignition system and/or an engine management system of the vehicle and/or vehicle motion sensor means.

4. A system according to any preceding claim, wherein the adjustment feature comprises a control of the device which control enables the status or mode of operation of the device to be adjusted or the positional orientation of the device to be varied.

5. A system according to any preceding claim, wherein the shut-out means comprises a physical shield or barrier arranged to be configured to deny access to the adjustment feature of the device when the vehicle is in the first state of operation.

6. A system according to claim 5, wherein the shut-out means includes locking means to ensure that the shield or barrier is locked in the shut-out position.

7. A system according to any preceding claim further including fail safe means ensuring that the state of operation of the vehicle cannot be changed to the relevant alternate state until the shut-out means is operative.

8. A system according to any preceding claim, wherein the adjustment feature of the vehicle situated device operates to provide an operational control signal to control the device and the shut-out means operates to disable or deactivate operation of the control signal when the vehicle is in the first state of operation, preferably wherein the shut-out means comprises an electrical by-pass of the relevant adjustment feature, the by-pass being overridden when the vehicle is in the alternate state.

9. A system according to any preceding claim, including shut-out means comprising:
(i) a physical shield or barrier; and
(ii) an overridable electrical bypass of the relevant adjustment feature.

10. A monitoring arrangement comprising:
(i) a vehicle situated electrical or electronic monitoring device; and
(ii) a control arrangement for controlling the monitoring device, which control arrangement comprising shut-out means denying access to, or disabling an adjustment feature of the device but permitting operation of the device in a predetermined mode of operation when the vehicle is in a first condition of operation, the shut-out means being disable or overridable when the vehicle is in an alternate state of operation, thereby permitting the respective adjustment means to be accessed or enabled.
